# FASCICULE DE BREVET EUROPEEN

(11) **EP 2 343 508 B1**
(45) Date de publication et mention de la délivrance du brevet: **07.09.2016**
(21) Numéro de dépôt: 10195505.2
(22) Date de dépôt: 16.12.2010
(51) Int. Cl.: G01D 5/245, G01D 5/347

(54) **Codeur optique**
Optischer Kodierer
Optical encoder

(30) Priorité: 23.12.2009 FR 0906272
(43) Date de publication de la demande: 13.07.2011
(73) Titulaire: Thales, 92200 Neuilly Sur Seine (FR)
(72) Inventeur: Bigand, Jean-Louis, 41100 VENDOME (FR); Brisse, Marie, 41240 VILLERMAIN (FR)
(74) Mandataire: Collet, Alain

(56) Documents cités:
- DE-A1- 19 529 007
- DE-A1-102006 047 471
- US-A1- 2004 178 332
- US-A1- 2006 202 114
- US-A1- 2007 228 265

## Description

L'invention concerne les codeurs optiques fournissant des signaux logiques binaires représentant des incréments de position relative de deux éléments du codeur, les deux éléments étant mobiles l'un par rapport à l'autre. Ces codeurs optiques, par exemple angulaires, sont utilisés à la manière de potentiomètres, par exemple pour la commande manuelle d'appareils électroniques sensibles à un paramètre d'entrée pouvant varier en continu ou presque en continu, mais ils sont beaucoup plus fiables que les potentiomètres. Typiquement, dans une application pour des équipements aéronautiques, on peut utiliser un codeur angulaire optique pour indiquer à un calculateur de pilotage automatique une consigne d'altitude ou de vitesse que le pilote choisit en actionnant un bouton de commande qui fait tourner le codeur. La fiabilité du codeur et des informations qu'il délivre est alors un élément essentiel du codeur.

Un codeur angulaire optique est typiquement constitué par un disque portant des marques régulières, ce disque étant actionné en rotation par un bouton de commande (par exemple manuel). Une cellule photoélectrique fixée devant le disque détecte le défilement des marques successives lorsque le bouton de commande fait tourner le disque. Les marques sont typiquement des ouvertures dans un disque opaque, une diode électroluminescente étant placée d'un côté du disque et la cellule photoélectrique étant placée de l'autre côté.

Chaque passage de marque constitue un incrément d'une unité dans le comptage de la rotation du disque. La résolution angulaire est déterminée par le pas angulaire des marques régulièrement disposées sur un tour de disque. Pour détecter à la fois des incréments et des décréments d'angle de rotation lorsqu'on inverse le sens de rotation, on prévoit deux cellules photoélectriques décalées physiquement d'un nombre impair de quart de pas entre elles. Ainsi, les états logiques éclairée/non-éclairée des deux cellules sont codés sur deux bits qui prennent successivement les quatre valeurs suivantes : 00, 01, 11, 10 lorsque le disque tourne dans un sens et les quatre valeurs successives suivantes 00, 10, 11, 01 lorsque le disque tourne dans l'autre, de sorte qu'il est facile de déterminer, non seulement l'apparition d'un incrément de rotation (changement d'état de l'un des bits) mais aussi le sens de rotation (par comparaison entre un état des cellules et l'état immédiatement antérieur).

Les diodes électroluminescentes sont montées sur un circuit imprimé fixe. Les cellules photoélectriques sont montées sur un autre circuit imprimé fixe. Un disque tournant comportant des fenêtres passe entre les deux circuits imprimés. Un diaphragme fixe, interposé entre le disque tournant et le circuit imprimé portant les diodes électroluminescentes, permet d'améliorer la précision de l'encodage.

Cette solution nécessite deux circuits imprimés, du câblage entre les circuits et des positionnements relatifs précis des différents constituants du dispositif. Tout ceci rend le codeur complexe et industriellement difficile à réaliser. Par ailleurs, l'assemblage d'éléments électroniques associés à du câblage et à de la micromécanique rend fragile ce type d'architecture de codeur.

Pour simplifier la réalisation d'un codeur optique on a proposé de placer les diodes électroluminescentes, ou plus généralement les émetteurs, ainsi que les cellules photoélectriques ou plus généralement les détecteurs sur un même circuit imprimé. Des exemples de réalisation de tels codeurs sont décrits dans les documents US 2007/0228265 A1 et US 2004/0178332 A1.

Un objet de l'invention est un codeur optique incrémental, selon la revendication 1 améliorant le fonctionnement des codeurs connus.

L'invention sera mieux comprise et d'autres avantages apparaîtront à la lecture de la description détaillée d'un mode de réalisation donné à titre d'exemple, description illustrée par le dessin joint dans lequel :
la figure 1 représente en perspective un exemple de réalisation d'un codeur rotatif dans un premier mode de réalisation non revendiqué et mettant en oeuvre une transmission optique directe entre des émetteurs et des détecteurs ;
la figure 2 représente un élément mobile du premier mode de réalisation ;
la figure 3 représente le passage de l'élément mobile de la figure 2 entre des émetteurs et des détecteurs solidaires d'un élément fixe du codeur ;
la figure 4 représente en coupe une première variante non revendiquée d'un second mode de réalisation mettant en oeuvre une réflexion dans la transmission entre des émetteurs et des détecteurs ;
la figure 5 représente en coupe une deuxième variante du second mode de réalisation ;
la figure 6 représente en perspective la seconde variante de la figure 5 ;
les figures 7 et 8 représentent en perspective deux pièces du codeur des figures 5 et 6 destinées à être en mouvement l'une par rapport à l'autre ;
les figures 9a à 9d représentent différents positions relatives des deux pièces des figures 7 et 8 ;
la figure 10 représente en perspective une troisième variante du second mode de réalisation ;
les figures 11a à 11 d représentent différents positions relatives de pièces du codeur de la troisième variante ;
la figure 12 représente un exemple de codeur double ;
la figure 13 représente un exemple de d'informations obtenues au moyen d'un codeur comprenant deux couples d'émetteurs et de détecteurs lors des différentes positions relatives définies sur les figures 9a à 9d ainsi que sur les figures 11 a à 11 d.

Par souci de clarté, les mêmes éléments porteront les mêmes repères dans les différentes figures.

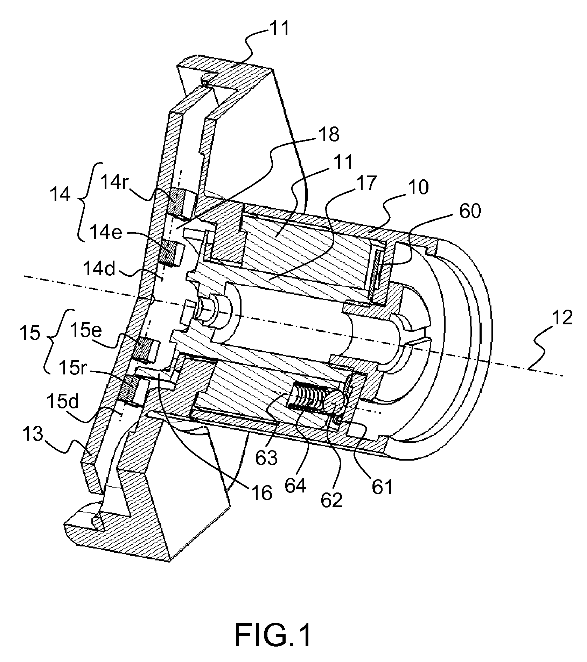

La figure 1 représente un codeur rotatif comprenant un élément mobile 10 par rapport à un élément fixe 11. L'élément mobile 10 comprend par exemple un bouton qu'un utilisateur peut manoeuvrer en rotation autour d'un axe 12 pour entrer une donnée vers un équipement électronique. L'élément mobile 10 comprend également toutes les pièces solidaires de ce bouton. L'élément fixe 11 comprend un boitier du codeur ainsi que toutes les pièces solidaires de ce boitier. L'élément fixe 11 est solidaire de l'équipement. L'invention est décrite en rapport à un codeur rotatif mais peut tout aussi bien être mise en oeuvre dans un codeur linéaire. L'élément mobile peut alors se déplacer en translation par rapport à l'élément fixe.

Le codeur comprend un circuit imprimé 13 plan et solidaire de l'élément fixe 11. Le codeur comprend également un palier permettant le guidage en rotation de l'élément mobile 10 par rapport à l'élément fixe 11. Dans l'exemple représenté, le plan du circuit imprimé 13 est perpendiculaire à l'axe 12. Deux couples 14 et 15 formés chacun d'un émetteur, respectivement 14e et 15e, et d'un détecteur respectivement 14r et 15r sont solidaires du circuit imprimé 13. Les émetteurs 14e et 15e sont par exemple des diodes électroluminescentes et les détecteurs 14r et 15r sont des photodétecteurs sensibles au rayonnement émis par les diodes électroluminescentes.

Dans ce premier mode de réalisation non revendiqué, les émetteurs 14e et 15e émettent chacun un rayonnement lumineux autour d'une direction principale parallèle au plan du circuit imprimé 13. Cette direction est conventionnellement celle ou l'intensité lumineuse est la plus importante. Autour de cette direction l'intensité lumineuse décroit pour former un champ angulaire autour de la direction principale. On peut définir une représentation de l'intensité lumineuse émise par un émetteur en coordonnées polaires. Dans cette représentation, l'intensité forme un lobe centré sur la direction principale.

Dans chaque couple 14 et 15 le détecteur correspondant 14r ou 15r fait face à la direction principale autour de laquelle le rayonnement lumineux est émis. On définit également une direction principale autour de laquelle le détecteur peut détecter un rayonnement lumineux. Par analogie on peut définir un lobe de réception pour chacun des détecteurs 14r et 15r. Dans ce mode de réalisation, pour chaque couple 14 et 15, les directions principales de l'émetteur 14e ou 15e et du détecteur correspondant 14r ou 15r sont sensiblement confondues et portent le même repère, respectivement 14d et 15d. Dans la pratique, un décalage entre les directions principales d'un émetteur par rapport au détecteur correspondant est acceptable tant que les lobes respectifs sont concourants.

Le codeur comprend au moins une marque 16 solidaire de l'élément mobile 10. Lors du mouvement de l'élément mobile 10 par rapport à l'élément fixe 11, la marque 16 peut se placer sur le trajet d'un des rayonnements lumineux pour être détectée par le détecteur correspondant 14r ou 15r.

Dans ce mode de réalisation, la marque 16 forme un masque pouvant interrompre le rayonnement lumineux. Dans la pratique, un codeur possède généralement plusieurs marques 16 régulièrement réparties autour de l'axe 12.

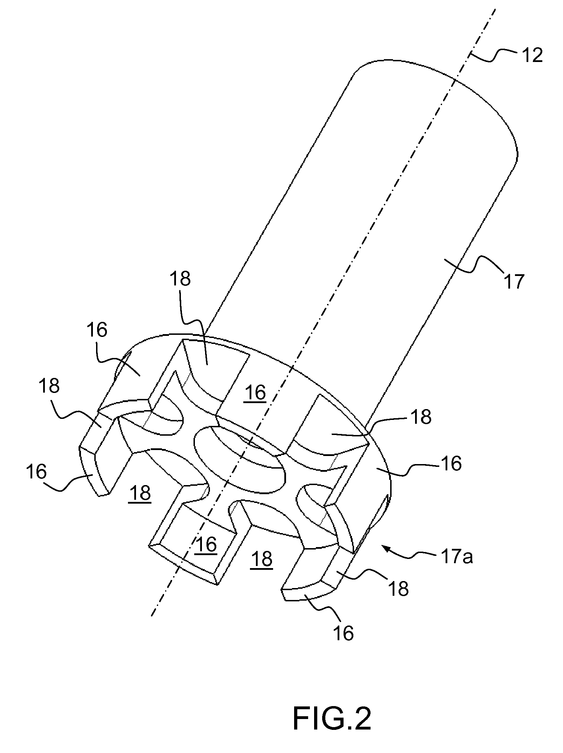

La figure 2 représente une pièce 17 de l'élément mobile 10 dans laquelle six marques 16 sont réalisées. Les marques 16 sont réalisées dans une surface cylindrique 17a d'axe 12. Lors de la rotation de la pièce 17 autour de l'axe 12, les marques 16 coupent les directions 14d et 15d et interrompent la progression du rayonnement entre l'un des émetteurs 14e ou 15e et le détecteur associé 14r ou 15r. Entre les marques 16, des créneaux 18 sont réalisés. Ces créneaux 18 forment des ouvertures permettant au rayonnement issu d'un émetteur d'atteindre le détecteur correspondant lorsqu'un créneau 18 est situé sur la direction 14d ou 15d du couple 14 ou 15 considéré lors de la rotation de la pièce 17.

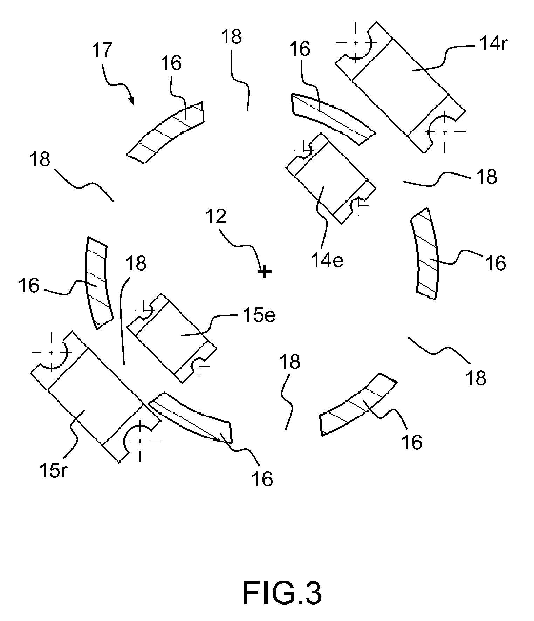

La figure 3 représente les deux couples 14 et 15 ainsi que la pièce 17 en coupe dans un plan perpendiculaire à l'axe 12 et contenant les directions 14d et 15d. Dans cette vue, on peut observer que le masquage des émetteurs 14e et 15e par les marques 16 n'est pas complet. En effet, les émetteurs 14e et 15e et les détecteurs 14r et 15r comprennent des surfaces planes parallèlement à l'axe 12. Par ailleurs, les marques 16 forment des portions cylindriques faisant face aux surfaces planes des émetteurs 14e et 15e et des détecteurs 14r et 15r. L'obturation des émetteurs 14e et 15e ne peut donc pas être parfait et des fuites lumineuses peuvent perturber la détection faite par les détecteurs 14r et 15r.

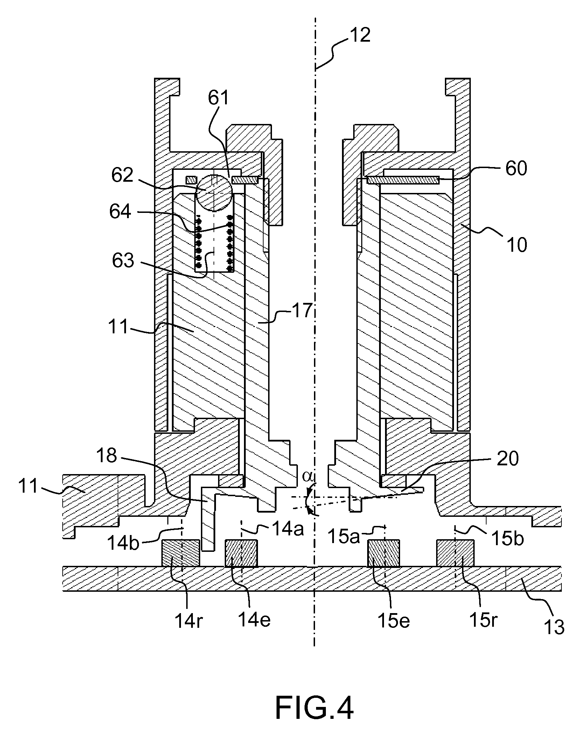

La figure 4 représente en coupe une première variante d'un second mode de réalisation mettant en oeuvre une réflexion dans la transmission entre les émetteurs 14e et 15e et les détecteurs correspondants 14r et 15r. Autrement dit, une marque 20 forme un élément réfléchissant le rayonnement issu d'un émetteur 14e ou 15e en direction du détecteur correspondant 14r ou 15r. Cette première varainte n'est pas revendiquée.

Dans le premier mode de réalisation, la marque 16 interrompt le rayonnement lumineux entre émetteur et détecteur. Dans le second mode de réalisation la marque permet au contraire la transmission du rayonnement entre émetteur et détecteur. Il s'agit là d'une distinction purement conventionnelle. Pour les deux modes de réalisation, le codeur comprend une alternance de marques et d'absences de marques permettant l'alternance de transmission et d'interruption du rayonnement entre un émetteur et le détecteur correspondant. Si une marque permet la transmission, alors l'absence de marque correspondante permet l'interruption. La convention inverse est équivalente : si une marque permet l'interruption, alors l'absence de marque correspondante permet la transmission.

Dans le premier mode de réalisation, les directions principales 14d et 15d sont parallèles au plan du circuit imprimé 13. Par contre, dans le second mode de réalisation les directions principales notées 14a pour l'émetteur 14e, 14b pour le détecteur 14r, 15a pour l'émetteur 15e, 15b pour le détecteur 15r ne sont plus parallèles au plan du circuit imprimé 13. Les directions principales 14a, 14b, 15a et 15b font face à l'élément réfléchissant 20. Avantageusement, les émetteurs 14e et 15e émettent leur rayonnement lumineux autour d'une première direction, respectivement 14a et 15a, parallèle à l'axe 12 de rotation du codeur et les détecteurs 14r et 15r reçoivent leur rayonnement lumineux autour d'une seconde direction respectivement 14b et 15b, également parallèle à l'axe 12. Ce type de composant, émetteurs et détecteurs, d'approvisionnement courant, existe soit à piquer sur le circuit imprimé 13 soit à reporter en surface sur des plages conductrices du circuit imprimé 13. Les directions principales des différents composants sont alors perpendiculaires au circuit imprimé 13.

Cette disposition dans laquelle les directions principales 14a, 14b, 15a et 15b sont parallèles permet d'éviter un couplage direct dans un couple entre émetteur et détecteur lorsque l'élément réfléchissant 20 ne renvoie pas le rayonnement émis par l'un des émetteurs 14e ou 15e. Il est toutefois possible de ménager dans la pièces 17 des créneaux 18 permettant d'éviter d'éventuels rayonnement parasites pouvant perturber le codeur.

Avantageusement, les deux couples 14 et 15 sont disposés sur le circuit imprimé 13 de telle sorte que les directions principales 14a et 15a des émetteurs 14e et 15e soient plus proches de l'axe 12 du codeur que les directions 14b et 15b des détecteurs 14r et 15r. Lors du déplacement de l'élément mobile 10, lorsque l'élément réfléchissant 20 fait face au rayonnement émis par un des émetteurs 14e ou 15e, l'élément réfléchissant 20 est sensiblement centré sur la direction principale 14a ou 15a de l'émetteur 14e ou 15e considéré et forme un pan sensiblement incliné par rapport au plan du circuit imprimé 13. L'angle d'inclinaison α du pan est défini de façon à renvoyer le rayonnement émis par l'émetteur considéré vers le détecteur correspondant du couple 14 ou 15.

Dans la pratique, on choisit des détecteurs 14r et 15r dont le lobe de réception est suffisamment large pour recevoir un rayonnement décentré de l'axe 14b ou 15b, du à la position de l'élément réfléchissant 20. Il est néanmoins important de ne pas mettre en oeuvre des émetteurs ou des récepteurs dont les lobes sont trop larges afin d'éviter un couplage direct entre émetteur et récepteur associé.

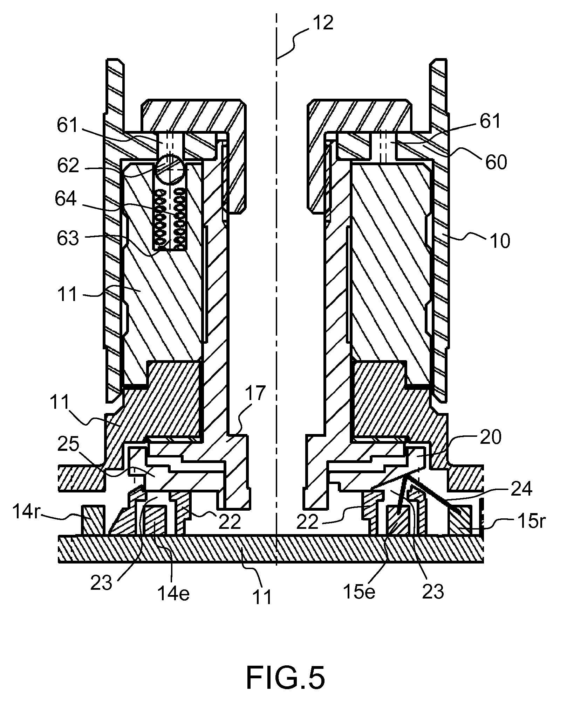

La figure 5 représente une variante de réalisation du mode de réalisation mettant en oeuvre un élément réfléchissant 20. Dans cette variante, le codeur comprend un cache 22 opaque et solidaire du circuit imprimé 13. Le cache 22 permet de limiter les fuites lumineuses et de limiter le champ angulaire du rayonnement lumineux. Sur la figure 5, un cache 22 entoure chacun des émetteurs 14e et 15e. Un autre cache 22 peut également entourer chacun des détecteurs 14r et 15r. Chaque cache 22 comprend une fenêtre 23 définissant le champ angulaire. Autrement dit, la fenêtre 23 laisse passer une partie du rayonnement lumineux et remplit une fonction de diaphragme optique par rapport à l'élément (émetteur ou récepteur) devant lequel est située la fenêtre. Le champ angulaire n'est pas obligatoirement centré sur la direction principale du composant, émetteur ou détecteur, que le cache 22 entoure. Autrement dit, le cache 22 permet de réduire le lobe du composant qu'il entoure. Les dimensions et la position de la fenêtre 23 sont définies en fonction de la positions relative des composants d'un couple et de celle de l'élément réfléchissant 20.

Sur la figure 5, est représenté en trait fort 24 le trajet du rayonnement émis par l'émetteur 15e, réfléchi par l'élément réfléchissant 20 et reçu par le détecteur 15r.

Avantageusement la pièce 17 comprend un masque 25 pouvant interrompre le rayonnement lumineux en obturant la fenêtre 23 lorsque l'élément réfléchissant 20 ne renvoie pas le rayonnement émis par l'un des émetteurs 14e ou 15e. En d'autres termes, l'élément mobile 10 comprend de part et d'autre de l'élément réfléchissant 20 un masque 25. Le fait de combiner un cache 22 entourant chaque émetteur 14e ou 15e avec un masque 25 obturant la fenêtre 23 est particulièrement avantageux. Ainsi lorsqu'un détecteur 14r et 15r ne doit pas recevoir de rayonnement, on limite dés la source lumineuse, la possibilité de fuite optique à l'intérieur du codeur. Le masque 25 permet d'obtenir un décodage optique précis en limitant les fuites optiques quand la marque réfléchissante est absente. De telles fuites nécessitent de faire un traitement du signal pour extraire le signal optique du bruit généré par les fuites. La présence d'un masque 25 obturant la fenêtre 23 permet de limiter ce traitement du signal. Dans cette combinaison la succession alternée d'éléments réfléchissants 20 et de masques 25 est sensiblement centrée sur la direction principale 14a ou 15a de l'émetteur 14e ou 15e considéré.

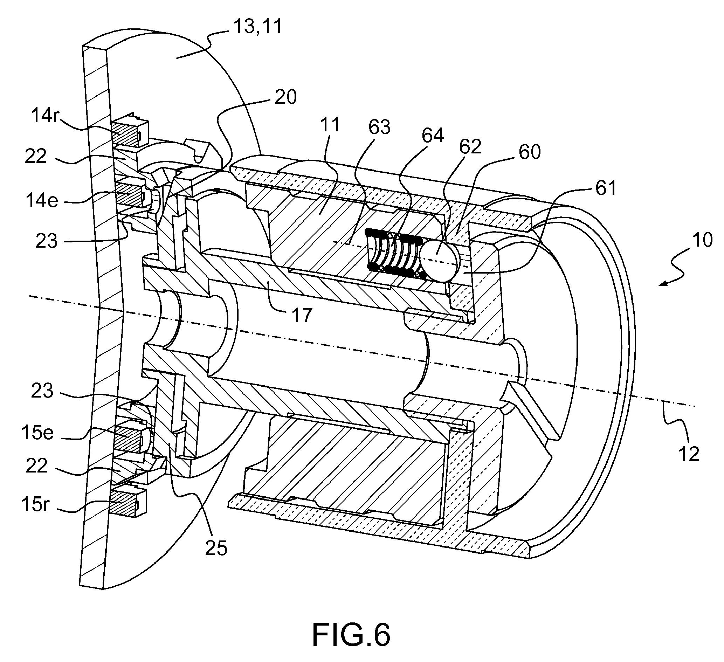

La figure 6 représente en perspective le codeur de la figure 5. Dans la position relative des deux éléments 10 et 11 représentée sur cette figure, un élément réfléchissant 20 permet au rayonnement émis par l'émetteur 14e d'être reçu par le détecteur 14r. Par contre l'émetteur 15e est masqué par un masque 25.

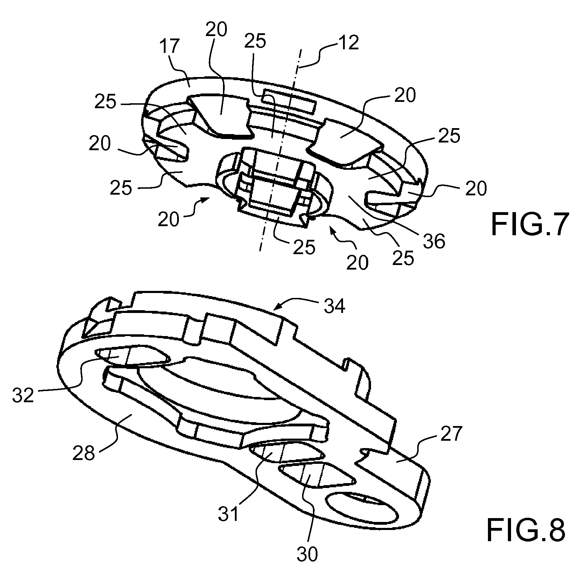

La figure 7 représente une partie de la pièce 17 solidaire de l'élément mobile 10 et la figure 8 représente un pièce 27 solidaire du circuit imprimé 13 donc fixe dans le codeur. Sur la figure 7, on voit apparaitre une succession alternée d'élément réfléchissants 20 et de masques 25 occupant chacun un secteur angulaire identique autour de l'axe 12. La pièce 27 comporte une surface plane 28 venant en contact avec le circuit imprimé 13. Des orifices 30, 31 et 32 sont réalisés dans la pièce 27 conformés pour recevoir chacun un émetteur ou un détecteur. Plus précisément, l'orifice 30 est prévu pour recevoir le détecteur 15r. L'orifice 31 est prévu pour recevoir l'émetteur 15e et l'orifice 32 est prévu pour recevoir l'émetteur 14e. La pièce 27 forme les différents caches 22. La pièce 27 comprend une seconde surface plane 34 parallèle à la surface 28 et destinée à glisser une surface plane 36 de la pièce mobile 17. Les différents masques 25 sont réalisés dans la surface plane 36 et les élément réfléchissants 20 sont réalisés en creux dans la surface plane 36. Dans la pratique, pour limiter le frottement dans le codeur, un jeu fonctionnel peut subsister entre les surfaces planes 34 et 36. Ce jeu est fonction de la chaîne de cotes reliant l'élément fixe 11 et l'élément mobile 10 dans la direction de l'axe 12. On prendra soin de limiter ce jeu afin de masquer au mieux les émetteurs 14e et 15e lorsque les masques 25 les recouvrent.

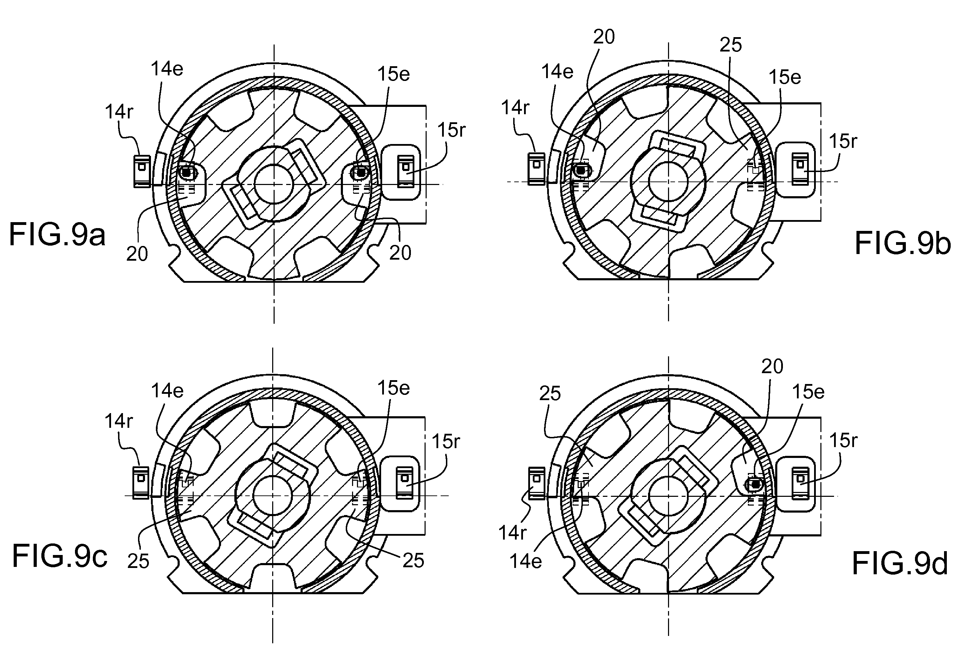

Les figure 9a à 9d représentent différents positions relatives des deux pièces 17 et 27 représentées sur les figures 7 et 8 dans un plan perpendiculaire à l'axe 12 et coupant la pièce 17 au voisinage du plan 36. Sur la figure 9a, des éléments réfléchissants 20 font face aux émetteurs 14e et 15e et les détecteurs 14r et 15r sont tous deux éclairés par le rayonnement émis par l'émetteur correspondant. Sur la figure 9b un élément réfléchissant 20 fait face à l'émetteur 14e et un masque 25 fait face à l'émetteur 15e. Sur la figure 9c, des masques 25 font face aux émetteurs 14e et 15e et sur la figure 9d, un masque 25 fait face à l'émetteur 14e et un élément réfléchissant 20 fait face à l'émetteur 15e.

Les différents variantes présentées précédemment nécessitent une précision importante dans leur construction. Notamment la position relative des détecteurs 14r et 15r doit être fonction du pas d'incrément. Il en est de même pour la pièce 17 dont les dimensions et la position de chaque marque doivent être en rapport à celles des détecteurs 14r et 15r.

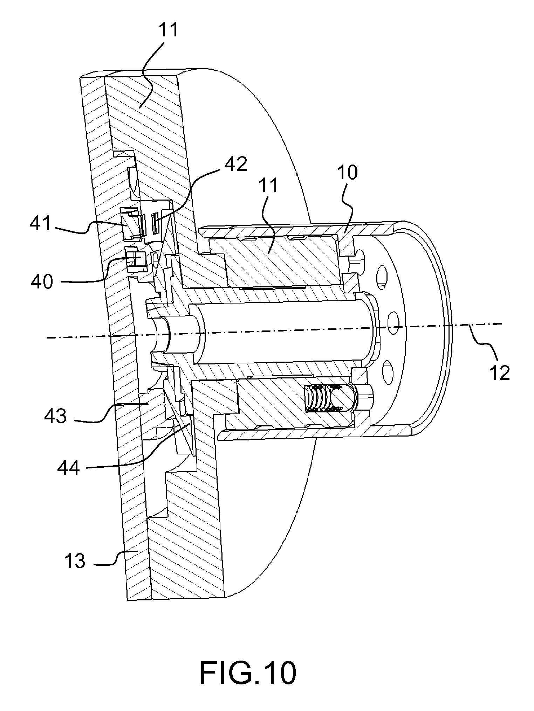

La figure 10 représente une autre variante du mode de réalisation de l'invention visant à simplifier la réalisation d'un codeur optique en élargissant les tolérances de fabrication de certains éléments du codeur, notamment les tolérances de positionnement des détecteurs 14r et 15r ainsi que les tolérances des dimensions et des positions des marques 20 de la pièce 17. La variante représentée sur la figure 10 met en oeuvre un élément réfléchissant 20. Dans cette variante, un émetteur 40 peut coopérer avec deux détecteurs 41 et 42 situés au voisinage l'un de l'autre. Il est bien entendu que cette coopération entre un émetteur et deux détecteurs peut être mise en oeuvre dans le mode de réalisation décrit à l'aide des figures 1 à 3. Les deux détecteurs 41 et 42 sont aptes à détecter une même marque 20. Les dimensions de la marque 20 sont définies de façon à pouvoir être détectée soit par aucun des deux détecteurs 41 et 42, soit par un seul détecteur soit par les deux détecteurs. Dans la variante représentée, on a prévu qu'un seul émetteur 40 puisse éclairer les deux détecteurs 41 et 42. Un seul émetteur 40 permet de réduire le nombre de composants implantés sur le circuit imprimé 13. Il est également possible de prévoir un émetteur dédié à chaque détecteur 41 et 42.

Une pièce 43 solidaire du circuit imprimé 13 remplit les mêmes fonctions que la pièce 27 décrite plus haut, à savoir la réalisation de caches 22, notamment autour des deux détecteurs 41 et 42 pour leur permettre à chacun de détecter indépendamment de l'autre la marque 20. Une pièce 44 solidaire de l'élément mobile 10 remplit les mêmes fonctions que la pièce 17 décrite plus haut, à savoir l'alternance des éléments réfléchissants formant les marques 20 et des masques 25.

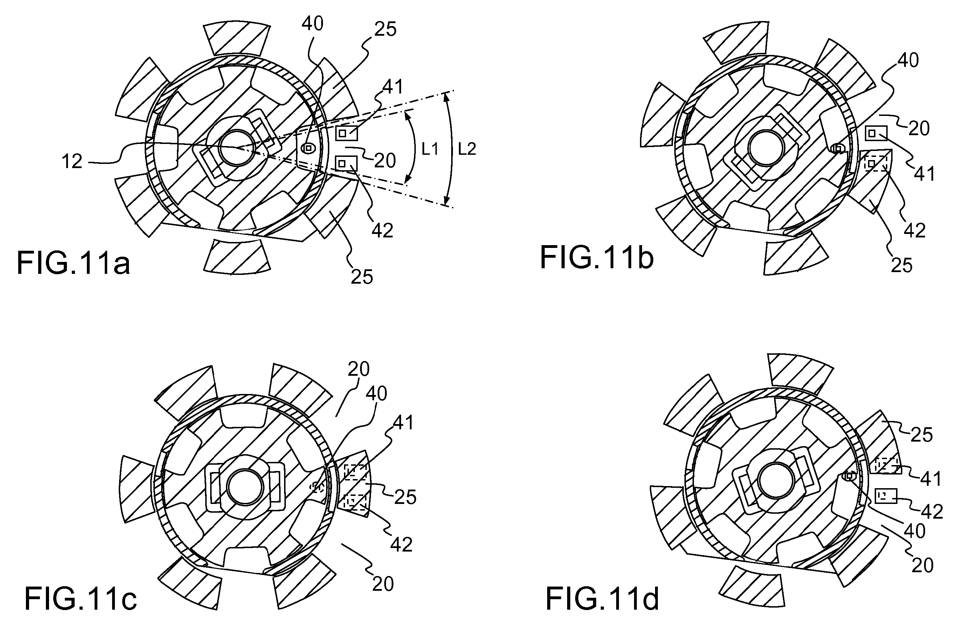

Les figures 11a à 11 d représentent différents positions relatives des deux pièces 43 et 44 représentées sur la figure 10. Sur la figure 11 a, un élément réfléchissant 20 permet d'éclairer les deux détecteurs 41 et 42. Sur la figure 11 b, un élément réfléchissant 20 permet d'éclairer le détecteur 41 et un masque 25 empêche l'éclairement du détecteur 42. Sur la figure 11 c, un masque 25 empêche l'éclairement des deux détecteurs 41 et 42. Enfin sur la figure 11 d, un élément réfléchissant 20 permet d'éclairer le détecteur 42 et un masque 25 empêche l'éclairement du détecteur 41.

Pour le codeur, on définit une mesure de longueur suivant la direction du déplacement de l'élément mobile 10 par rapport à l'élément fixe 11. Pour un codeur linéaire, il s'agit d'une longueur linéaire. Pour un codeur rotatif, la mesure de longueur est angulaire.

Pour la variante où une marque 20 peut être détectée par deux détecteurs, une longueur L1 d'une zone de l'élément fixe 11 incluant les deux détecteurs 41 et 42 est inférieure à une longueur L2 de la marque 20. La zone est la surface minimale occupée par les deux détecteurs 41 et 42, y compris l'espace situé entre les détecteurs 41 et 42.

La détection de la marque 20 se fait sur un bord de celle-ci. La longueur de la marque 20 n'a donc aucune influence sur la détection de la marque 20. La tolérance de fabrication de la marque 20 s'en trouve élargie. En effet, la longueur L2 minimale de la marque 20 est la longueur de la zone incluant les deux détecteurs 41 et 42. Par contre la longueur L2 maximale de la marque 20 n'est pas liée à la longueur L2 de la zone mais est uniquement fonction du nombre d'incréments du codeur.

De plus, la position relative des deux détecteurs 41 et 42 n'est pas fonction du nombre d'incréments. On peut donc standardiser un circuit imprimé 13 portant des deux détecteurs 41 et 42 pour des codeurs différents ne possédant pas le même nombre d'incréments.

Dans le cas d'un codeur rotatif, tel que représenté sur les figures 10 et 11, il est préférable de placer l'émetteur 40 plus près de l'axe 12 de rotation du codeur que les détecteurs 41 et 42. Cela permet d'élargir les tolérances de position des détecteurs 41 et 42.

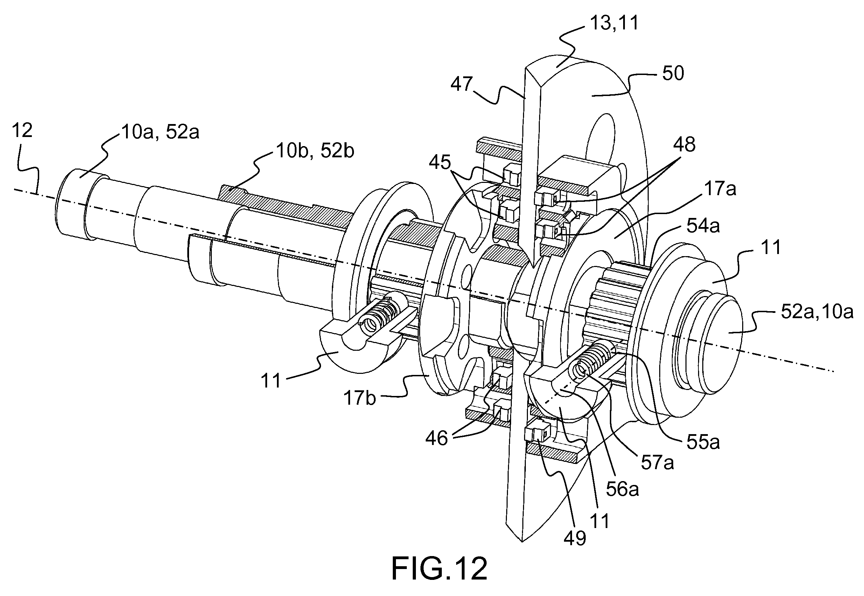

La figure 12 représente un exemple de codeur double dans lequel le circuit imprimé 13 porte quatre couples d'émetteurs et de détecteurs, deux couples 45 et 46 fixés sur une première face 47 du circuit imprimé 13 et deux couples 48 et 49 fixés sur une seconde face 50 du circuit imprimé 13. La seconde face 50 est opposée à la première face 47. De façon plus générale, le circuit imprimé 13 porte au moins un couple sur chacune de ses faces. Ce codeur permet d'obtenir, dans un encombrement réduit, un dispositif à double entrée de donnée. Les fonctions électriques du codeur sont toutes regroupées sur un seul circuit imprimé. Parmi ces fonctions on trouve essentiellement les émetteurs, les récepteurs et leur câblage.

Une première entrée de donnée se fait par un premier bouton 52a solidaire d'une pièce 17a coopérant avec les couples 48 et 49. Le premier bouton 52a et la pièce 17a forment un premier élément mobile 10a par rapport à l'élément fixe 11.

Une seconde entrée de donnée se fait par un second bouton 52b solidaire d'une pièce 17b coopérant avec les couples 45 et 46. Le second bouton 52b et la pièce 17b forment un second élément mobile 10b par rapport à l'élément fixe 11. Les pièces 17a et 17b sont semblables à la pièce 17 précédemment décrite et remplissent les mêmes fonctions. Les pièces 17a et 17b portent une succession alternée de marques 20 et d'absence de marque régulièrement réparties. Les boutons 52a et 52b sont tous deux concentriques de l'axe 12 et peuvent être manoeuvrés séparément.

Avantageusement le codeur comprend des moyens pour définir mécaniquement des positions stables des deux éléments 10 et 11 l'un par rapport à l'autre.

Dans l'exemple représenté sur la figure 12, ces moyens comprennent par exemple une roue crantée 54a solidaire de l'élément mobile 10a et une bille 55a reliée à l'élément fixe 11. La bille 55a est libre en translation par rapport à l'élément fixe 11 selon une direction 56a radiale de l'élément fixe 11. La bille 55a peut se déplacer d'un cran à l'autre de la roue 54a. La bille 55a peut être poussée par un ressort 57a, pour la maintenir au fond de chaque cran. Les positions stables de l'élément mobile 10a par rapport à l'élément fixe 11 sont définies par les positions de la bille 55a au fond de chaque cran de la roue 54a. Des moyens analogues pour définir des positions stables de l'élément mobile 10b par rapport à l'élément fixe 11 sont également représentés sur la figure 12.

Dans les exemples représentés sur les figures 1, 4, 5, 6 et 10 des moyens pour définir des positions stables de l'élément mobile 10 par rapport à l'élément fixe 11 comprennent un disque 60 appartenant à l'élément mobile 10. Le disque 60 s'étend dans un plan perpendiculaire à l'axe 12 et est percé de plusieurs trous 61. Une bille 62 est reliée à l'élément fixe 11. La bille 62 est libre en translation par rapport à l'élément fixe 11 selon une direction 63 parallèle à l'axe 12. Les trous 61 sont disposés sur le disque 60 de telle sorte que la bille 62 puisse se déplacer d'un trou à l'autre. La bille 62 peut être poussée par un ressort 64 selon un axe 63 pour la maintenir dans chaque trou 61. Les positions stables de l'élément mobile 10 par rapport à l'élément fixe 11 sont définies par les positions de la bille 62 dans chaque trou 61.

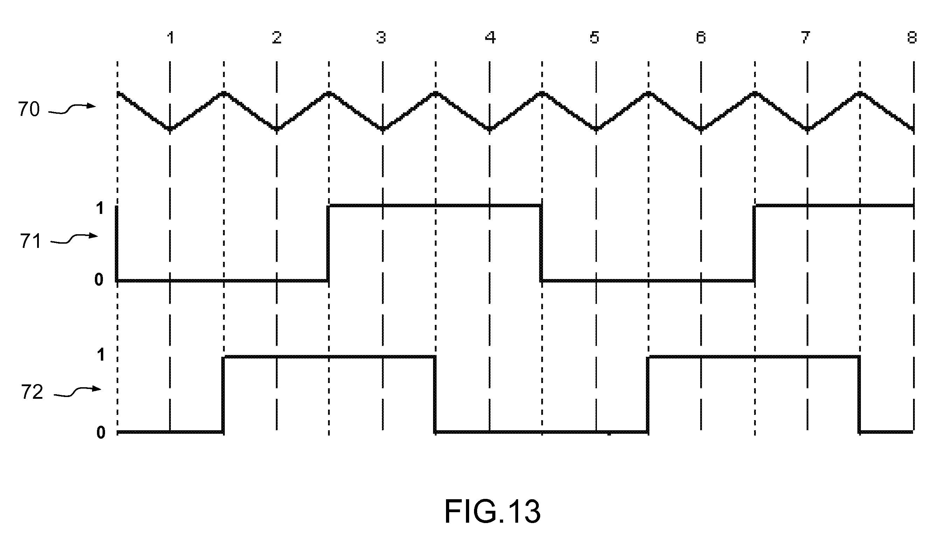

La figure 13 représente le codage obtenu par deux détecteurs en fonction des positions stables de l'élément mobile 10 par rapport à l'élément fixe 11. Huit positions stables, numérotées de 1 à 8, sont représentées en partie haute de la figure 13. Le déplacement de l'élément mobile 10 par rapport à l'élément fixe 11 est représenté horizontalement sur la figure 13. Une ligne brisée 70, en dent de scie, représente les positions stables en symbolisant par exemple la roue crantée 54a. Une courbe 71 représente le codage obtenu au moyen du détecteur 14r ou 41 et une courbe 72 représente le codage obtenu au moyen du détecteur 15r ou 42. Le codage issu des détecteurs est binaire et peut prendre deux valeurs notées 0 et 1. Le codage issu du détecteur 14r ou 41 prend la valeur 0 pour les positions 1, 2, 5 et 6 et la valeur 1 pour les positions 3, 4, 7 et 8. Le codage issu du détecteur 15r ou 42 prend la valeur 0 pour les positions 1, 4, 5 et 8 et la valeur 1 pour les positions 2, 3, 6 et 7.

Les positions 1 et 5 correspondent à celles représentées sur les figures 9c et 11 c. Les positions 2 et 6 correspondent à celles représentées sur les figures 9d et 11 b. Les positions 3 et 7 correspondent à celles représentées sur les figures 9a et 11a. Les positions 4 et 8 correspondent à celles représentées sur les figures 9b et 11d.

## Revendications

1. Codeur optique incrémental, comprenant un élément mobile (10) et un élément fixe (11), au moins un couple (14, 15, 45, 46) formé d'un émetteur (14e, 15e, 40) lumineux et d'un détecteur (14r, 15r, 41, 42) lumineux solidaires de l'élément fixe, l'émetteur (14e, 15e, 40) produisant un rayonnement lumineux que le détecteur (14r, 15r, 41, 42) peut détecter, et au moins une marque (16, 20) solidaire de l'élément mobile (10), lors du mouvement de l'élément mobile (10) par rapport à l'élément fixe (11), la marque (20) pouvant se placer sur le trajet du rayonnement lumineux pour être détectée par le détecteur (14r, 15r, 41, 42), le codeur comprenant en outre un circuit imprimé (13) plan, solidaire de l'élément fixe (11) et sur lequel est disposé le couple (14, 15, 45, 46) d'émetteur (14e, 15e, 40) et de détecteur (14r, 15r, 41, 42), et un cache (22) opaque solidaire du circuit imprimé (13), le cache (22) permettant de limiter le champ angulaire du rayonnement lumineux, la marque (20) formant un élément réfléchissant le rayonnement issu de l'émetteur (14e, 15e, 40) en direction du détecteur (14r, 15r, 41, 42), le cache (22) permettant d'éviter l'établissement d'un rayonnement direct entre l'émetteur (14e, 15e, 40) et le détecteur (14r, 15r, 41, 42), **caractérisé en ce que** le cache (22) entoure l'émetteur et/ou le détecteur et comprend une fenêtre (23) définissant le champ angulaire, et **en ce que** le codeur comprend un masque (25) adapté pour interrompre le rayonnement lumineux en obturant la fenêtre (23) lorsque l'élément réfléchissant (20) ne renvoie pas le rayonnement émis par l'émetteur (14e, 15e).

2. Codeur optique selon la revendication 1, **caractérisé en ce que** le codeur est rotatif autour d'un axe (12) et **en ce que** le plan du circuit imprimé (13) est perpendiculaire à l'axe (12).

3. Codeur optique selonla revendication 2, **caractérisé en ce que** l'émetteur (14e, 15e, 40) émet le rayonnement lumineux autour d'une première direction (14a, 15a) parallèle à l'axe (12) et le détecteur (14r, 15r, 41, 42) reçoit le rayonnement lumineux autour d'une seconde direction (14b, 15b) parallèle à l'axe (12).

4. Codeur optique selon la revendication 3, **caractérisé en ce que** la première direction (14a, 15a) est plus proche de l'axe (12) du codeur que la seconde direction (14b, 15b), **en ce que** l'élément réfléchissant (20) est sensiblement centré sur la première direction (14a, 15a) et forme un pan sensiblement incliné par rapport au plan du circuit imprimé (13) et **en ce que** un angle (α) d'inclinaison du pan est défini de façon à renvoyer le rayonnement émis par l'émetteur (14e, 15e, 40) vers le détecteur (14r, 15r, 41,42).

5. Codeur optique selon l'une des revendications précédentes, **caractérisé en ce que** dans la direction de déplacement de l'élément mobile (10) par rapport à l'élément fixe (11), l'élément mobile (10) comprend, de part et d'autre de l'élément réfléchissant (20), un masque (25) pouvant interrompre le rayonnement lumineux.

6. Codeur optique selon l'une des revendications précédentes, **caractérisé en ce que** l'élément fixe (11) comprend un second détecteur (42) lumineux solidaire de l'élément fixe (11), les deux détecteurs (41, 42) étant aptes à détecter une même marque (20), les dimensions de la marque (20) sont définies de façon à pouvoir être détectée soit par aucun des deux détecteurs (41, 42), soit par un seul détecteur (41, 42) soit par les deux détecteurs (41, 42) et **en ce qu'**une longueur d'une zone de l'élément fixe (11) incluant les deux détecteurs (41, 42) est inférieure à une longueur de la marque (20), les longueurs étant mesurées dans la direction du déplacement de l'élément mobile (10) par rapport à l'élément fixe (11).

7. Codeur optique selon la revendication 6 en tant que revendication dépendante de la revendication 2, **caractérisé en ce que** l'émetteur (40) est disposé plus près de l'axe (12) de rotation du codeur que les détecteurs (41, 42).

8. Codeur optique selon l'une des revendications précédentes, **caractérisé en ce qu'**il comprend deux éléments mobiles (10a, 10b) par rapport à l'élément fixe (11), le circuit imprimé (13) comprenant des faces opposées (47, 50), au moins un premier couple (45, 46) formé d'un émetteur lumineux et d'un détecteur lumineux fixé sur la première face (47) du circuit imprimé (13) et au moins un second couple (48, 49) formé d'un émetteur lumineux et d'un détecteur lumineux fixé sur la seconde face (50) du circuit imprimé (13), au moins une première marque solidaire du premier élément mobile (10a), lors du mouvement du premier élément mobile (10a) par rapport à l'élément fixe (11), la première marque pouvant se placer sur le trajet du rayonnement lumineux pour être détectée par le détecteur du premier couple (45, 46) et au moins une seconde marque solidaire du second élément mobile (10b), lors du mouvement du second élément mobile (10b) par rapport à l'élément fixe (11), la seconde marque pouvant se placer sur le trajet du rayonnement lumineux pour être détectée par le détecteur du second couple (48, 49).

9. Codeur optique selon l'une des revendications précédentes, **caractérisé en ce qu'**il comprend des moyens (54a, 55a, 57a ; 60, 61, 62, 64) pour définir mécaniquement des positions stables de l'élément mobile (10) par rapport à l'élément fixe (11).

## Patentansprüche

1. Optischer Inkrementalkodierer, umfassend ein bewegliches Element (10) und ein feststehendes Element (11), zumindest ein Paar (14, 15, 45, 46) gebildet aus einem Lichtsender (14e, 15e, 40) und einem Lichtempfänger (14r, 15r, 41, 42), die fest mit dem feststehenden Element verbunden sind, wobei der Sender (14e, 15e, 40) eine Lichtstrahlung produziert, die der Empfänger (14r, 15r, 41, 42) erkennen kann, und zumindest eine Markierung (16, 20), die fest mit dem beweglichen Element (10) verbunden ist wenn sich das bewegliche Element (10) gegenüber dem feststehenden Element (11) bewegt, wobei die Markierung (20) sich auf der Bahn der Lichtstrahlung bewegen kann, um vom Empfänger (14r, 15r, 41, 42) erkannt zu werden, wobei der Kodierer außerdem eine flache Leiterplatte (13), die fest mit dem feststehenden Element (11) verbunden ist und auf der das Paar (14, 15, 45, 46) aus Sender (14e, 15e, 40) und Empfänger (14r, 15r, 41, 42) angeordnet ist, und eine lichtundurchlässige Abdeckung (22) umfasst, die fest mit der Leiterplatte (13) verbunden ist, wobei die Abdeckung (22) die Begrenzung des Winkelbereichs der Lichtstrahlung ermöglicht, wobei die Markierung (20) ein Element bildet, das die vom Sender (14e, 15e, 40) abgegebene Strahlung in Richtung des Empfängers (14r, 15r, 41, 42) zurückwirft, wobei die Abdeckung (22) die Entstehung einer direkten Strahlung zwischen dem Sender (14e, 15e, 40) und dem Empfänger (14r, 15r, 41, 42) zu verhindern ermöglicht, **dadurch gekennzeichnet, dass** die Abdeckung (22) den Sender und/oder Empfänger umgibt und ein Fenster (23) aufweist, das den Winkelbereich festlegt, und **dadurch gekennzeichnet, dass** der Kodierer eine Blende (25) umfasst, die geeignet ist, die Lichtstrahlung durch Verschließen des Fensters (23) zu unterbrechen wenn das reflektierende Element (20) die vom Sender (14e, 15e) abgegebene Strahlung nicht zurückschickt.

2. Optischer Kodierer gemäß Anspruch 1, **dadurch gekennzeichnet, dass** sich der Kodierer um eine Achse (12) drehen kann und dadurch, dass die Ebene der Leiterplatte (13) senkrecht zur Achse (12) ist.

3. Optischer Kodierer nach Anspruch 2, **dadurch gekennzeichnet, dass** der Sender (14e, 15e, 40) die Lichtstrahlung rund um eine erste Richtung (14a, 15a) parallel zur Achse (12) entsendet und der Empfänger (14r, 15r, 41, 42) die Lichtstrahlung rund um eine zweite Richtung (14b, 15b) parallel zur Achse (12) empfängt.

4. Optischer Kodierer nach Anspruch 3, **dadurch gekennzeichnet, dass** die erste Richtung (14a, 15a) näher bei der Achse (12) des Kodierers liegt als die zweite Richtung (14b, 15b), dass das reflektierende Element (20) im Wesentlichen auf der ersten Richtung (14a, 15a) zentriert ist und eine im Wesentlichen gegenüber der Ebene der Leiterplatte (13) geneigte Ebene bildet, und dass ein Neigungswinkel (α) der Ebene so definiert wird, dass die vom Sender (14e, 15e, 40) entsendete Strahlung zum Empfänger (14r, 15r, 41, 42) zurückgeschickt wird.

5. Optischer Kodierer nach einem der vorangehenden Ansprüche, **dadurch gekennzeichnet, dass** in Bewegungsrichtung des beweglichen Elements (10) gegenüber dem feststehenden Element (11) das bewegliche Element (10) auf beiden Seiten des reflektierenden Elements (20) eine Blende (25) umfasst, welche die Lichtstrahlung unterbrechen kann.

6. Optischer Kodierer nach einem der vorangehenden Ansprüche, **dadurch gekennzeichnet, dass** das feststehende Element (11) einen zweiten Lichtempfänger (42) umfasst, der fest mit dem feststehenden Element (11) verbunden ist, wobei beide Empfänger (41, 42) geeignet sind, eine selbe Markierung (20) zu erkennen, wobei die Abmessungen der Markierung (20) so definiert sind, dass sie entweder von keinem der beiden Empfänger (41, 42), von einem der beiden Empfänger (41, 42) oder von beiden Empfängern (41, 42) erkannt werden kann, und **dadurch gekennzeichnet, dass** eine Länge einer Zone des feststehenden Elements (11), welche die beiden Empfänger (41, 42) einschließt, geringer ist als eine Länge der Markierung (20), wobei die Längen in Bewegungsrichtung des beweglichen Elements (10) gegenüber dem feststehenden Element (11) gemessen werden.

7. Optischer Kodierer nach Anspruch 6 als vom Anspruch 2 abhängiger Anspruch, **dadurch gekennzeichnet, dass** der Sender (40) näher an der Rotationsachse (12) des Kodierers angeordnet ist, als die Empfänger (41, 42).

8. Optischer Kodierer nach einem der vorangehenden Ansprüche, **dadurch gekennzeichnet, dass** er zwei gegenüber dem feststehenden Element (11) bewegliche Elemente (10a, 10b) umfasst, wobei die Leiterplatte (13) gegenüberliegende Seiten (47, 50) umfasst, sowie zumindest ein erstes Paar (45, 46) bestehend aus einem Lichtsender und einem Lichtempfänger, das auf der ersten Seite (47) der Leiterplatte (13) angebracht ist, und zumindest ein zweites Paar (48, 49), bestehend aus einem Lichtsender und einem Lichtempfänger, das auf der zweiten Seite (50) der Leiterplatte (13) angebracht ist, zumindest eine erste Markierung, die bei der Bewegung des ersten beweglichen Elements (10a) gegenüber dem feststehenden Element (11) fest mit dem ersten beweglichen Element (10a) verbunden ist, wobei sich die erste Markierung auf der Bahn der Lichtstrahlung bewegen kann, um vom Empfänger des ersten Paares (45, 46) erkannt zu werden, und zumindest eine zweite Markierung, die bei der Bewegung des zweiten beweglichen Elements (10b) gegenüber dem feststehenden Element (11) fest mit dem zweiten beweglichen Element (10b) verbunden ist, wobei sich die zweite Markierung auf der Bahn der Lichtstrahlung bewegen kann, um vom Empfänger des zweiten Paares (48, 49) erkannt zu werden.

9. Optischer Kodierer nach einem der vorangehenden Ansprüche, **dadurch gekennzeichnet, dass** er Mittel (54a, 55a, 57a ; 60, 61, 62, 64) umfasst, um mechanisch stabile Positionen des beweglichen Elements (10) gegenüber dem feststehenden Element (11) festzulegen.

## Claims

1. Incremental optical encoder, comprising a movable element (10) and a fixed element (11), at least one pair (14, 15, 45, 46) formed by a light transmitter (14e, 15e, 40) and a light detector (14r, 15r, 41, 42) which are fixedly joined to the fixed element, the transmitter (14e, 15e, 40) producing a light radiation that the detector (14r, 15r, 41, 42) can detect, and at least one mark (16, 20) which is fixedly joined to the movable element (10) during the movement of the movable element (10) relative to the fixed element (11), the mark (20) being able to be placed in the path of the light radiation in order to be detected by the detector (14r, 15r, 41, 42), the encoder further comprising a planar printed circuit (13) which is fixedly joined to the fixed element (11) and on which the pair (14, 15, 45, 46) comprising the transmitter (14e, 15e, 40) and the detector (14r, 15r, 41, 42) is arranged and an opaque cover (22) which is fixedly joined to the printed circuit (13), the cover (22) enabling the angular range of the light radiation to be limited, the mark (20) forming an element which reflects the radiation originating from the transmitter (14e, 15e, 40) in the direction of the detector (14r, 15r, 41, 42), the cover (22) enabling the establishment of direct radiation between the transmitter (14e, 15e, 40) and the detector (14r, 15r, 41, 42) to be prevented, **characterised in that** the cover (22) surrounds the transmitter and/or the detector and comprises an aperture (23) which defines the angular range, and **in that** the encoder comprises a cover (25) which is adapted to interrupt the light radiation by blocking the aperture (23) when the reflective element (20) does not return the radiation transmitted by the transmitter (14e, 15e).

2. Optical encoder according to claim 1, **characterised in that** the encoder rotates about an axis (12) and **in that** the plane of the printed circuit (13) is perpendicular to the axis (12).

3. Optical encoder according to claim 2, **characterised in that** the transmitter (14e, 15e, 40) transmits the light radiation in a first direction (14a, 15a) parallel with the axis (12) and the detector (14r, 15r, 41, 42) receives the light radiation in a second direction (14b, 15b) parallel with the axis (12).

4. Optical encoder according to claim 3, **characterised in that** the first direction (14a, 15a) is closer to the axis (12) of the encoder than the second direction (14b, 15b), **in that** the reflective element (20) is substantially centred on the first direction (14a, 15a) and forms a plane which is substantially inclined relative to the plane of the printed circuit (13), and **in that** an angle (α) of inclination of the plane is defined so as to return the radiation transmitted by the transmitter (14e, 15e, 40) to the detector (14r, 15r, 41, 42).

5. Optical encoder according to any one of the preceding claims, **characterised in that**, in the movement direction of the movable element (10) relative to the fixed element (11), the movable element (10) comprises, at one side and the other of the reflective element (20), a cover (25) which may interrupt the light radiation.

6. Optical encoder according to any one of the preceding claims, **characterised in that** the fixed element (11) comprises a second light detector (42) which is fixedly joined to the fixed element (11), the two detectors (41, 42) being capable of detecting the same mark (20), the dimensions of the mark (20) are defined in order to be able to be detected by none of the two detectors (41, 42), or by a single detector (41, 42) or by both detectors (41, 42) and **in that** a length of a zone of the fixed element (11) including the two detectors (41, 42) is less than a length of the mark (20), the lengths being measured in the movement direction of the movable element (10) relative to the fixed element (11).

7. Optical encoder according to claim 6, as a claim dependent on claim 2, **characterised in that** the transmitter (40) is arranged closer to the rotation axis (12) of the encoder than the detectors (41, 42).

8. Optical encoder according to any one of the preceding claims, **characterised in that** it comprises two elements (10a, 10b) which can be moved relative to the fixed element (11), the printed circuit (13) comprising opposing faces (47, 50), at least a first pair (45, 46) formed by a light transmitter and a light detector which is fixed to the first face (47) of the printed circuit (13) and at least a second pair (48, 49) which is formed by a light transmitter and a light detector which is fixed to the second face (50) of the printed circuit (13), at least a first mark which is fixedly joined to the first movable element (10a), when the first movable element (10a) is moved relative to the fixed element (11), the first mark being able to be placed in the path of the light radiation in order to be detected by the detector of the first pair (45, 46) and at least a second mark which is fixedly joined to the second movable element (10b) when the second movable element (10b) is moved relative to the fixed element (11), the second mark being able to be placed in the path of the light radiation in order to be detected by the detector of the second pair (48, 49).

9. Optical encoder according to any one of the preceding claims, **characterised in that** it comprises means (54a, 55a, 57a; 60, 61, 62, 64) for mechanically defining stable positions of the movable element (10) relative to the fixed element (11).
